# EUROPÄISCHE PATENTSCHRIFT

(11) **EP 2 216 617 B1**
(45) Veröffentlichungstag und Bekanntmachung des Hinweises auf die Patenterteilung: **04.03.2015**
(21) Anmeldenummer: 10000371.4
(22) Anmeldetag: 16.01.2010
(51) Int. Cl.: F41A 23/50, B60R 19/54, F41H 11/11

(54) **Drahttrennvorrichtung für Panzerfahrzeuge mit Gestütz**
Wire cutting device for gun bearing armored vehicles
Dispositif de sectionnement de fils pour véhicules blindés avec arme

(30) Priorität: 06.02.2009 DE 102009007914
(43) Veröffentlichungstag der Anmeldung: 11.08.2010
(73) Patentinhaber: Rheinmetall Landsysteme GmbH, 29345 Unterlüß (DE)
(72) Erfinder: Thomsen, Kai, 24796 Bredenbek (DE); Reker, Alfred, 24159 Kiel (DE); Petersen, Heiko, 24113 Kiel (DE)
(74) Vertreter: Dietrich, Barbara

(56) Entgegenhaltungen:
- EP-A1- 2 258 589
- EP-A1- 2 371 628
- DE-A1- 2 052 033
- DE-A1- 3 217 170
- DE-C- 281 237
- DE-C- 284 346
- US-A- 1 289 196

## Beschreibung

Die Erfindung betrifft eine klappbare Seilfang- und Zuführein- bzw. -vorrichtung. Die Vorrichtung dient dabei zur Durchtrennung von quer zur Fahrbahn gespannten Drähten oder Seilen für ein mit einem schwenkbaren Geschützrohr versehenes gepanzertes Fahrzeug, wobei das Geschützrohr mit einer klappbaren Rohrzurrungseinrichtung in Wirkverbindung steht, derart, das die Rohrzurrungseinrichtung in einer vorgegebenen Ruheposition, bei welcher das Geschützrohr in Fahrtrichtung ausgerichtet ist, das Geschützrohr abstützt und vor einer bestimmungsgemäßen Verwendung des Geschützrohres von diesem wegklappbar ist.

Bei militärischen Operationen können Besatzungsmitglieder gepanzerter Fahrzeuge bei der "Fahrt über Luke", bei der sich die Oberkörper der Besatzungsmitglieder außerhalb der Fahrzeugkarosserie befinden, durch quer zur Fahrbahn gespannte Drähte oder Seile schwer verletzt werden.

Ein köstorischer Ausgangspunkt für den Anspruch 1 mit einer Vorrichtung zur Durchtrennung von quernur Fahrbahn gespannte Drähten oder Seilen für ein gepanzertes Fahrzeug bildet z.B. die US 1289196.

Der Erfindung liegt daher die Aufgabe zugrunde, eine Vorrichtung anzugeben, mittels welcher eine Verletzungsgefahr von Besatzungsmitgliedern gepanzerter Fahrzeuge während der "Fahrt über Luke" vor quer gespannten Drähten, Seilen oder ähnlichem vermieden wird, sofern das jeweils gepanzerte Fahrzeug mit einem Geschütz versehen ist, dessen schwenkbares Rohr sich in seiner Ruheposition durch eine in Fahrtrichtung angeordnete Rohrzurrungseinrichtung fahrzeugseitig abstützt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, eine Vorrichtung zur Durchtrennung von quer zur Fahrbahn gespannten Drähten oder Seilen zu verwenden, die aus einer Schneideinrichtung sowie einer Zuführeinrichtung zum Einfangen unterhalb des Geschützrohres des gepanzerten Fahrzeuges befindlicher Drähte oder Seile besteht. Damit der Bewegungsraum des Geschützrohres durch die erfindungsgemäße Vorrichtung nicht eingeschränkt wird, ist vorgesehen, die Zuführeinrichtung vor dem bestimmungsgemäßen Einsatz des Geschützrohres (d.h. vor dem Richten des Geschützes) aus dem Bewegungsraum wegzuklappen. Hierzu ist die klappbare Zuführeinrichtung mit der Rohrzurrungseinrichtung durch eine Koppelstange verbunden, sodass beim Wegklappen der Rohrzurrungseinrichtung aus ihrer Ruheposition über die Koppelstange auch die Zuführeinrichtung aus dem Bewegungsraum des Geschützrohres weggeklappt wird.

Bei einer bevorzugten Ausführungsform der Erfindung ist vorgesehen, dass die Zuführeinrichtung aus zwei stabförmigen Zuführelementen besteht, wobei das erste Zuführelement von einer ersten Endposition, bei der es sich nach oben in Richtung des Geschützrohres erstreckt, in eine zweite Endposition, bei der es aus dem Bewegungsraum des Geschützrohres weggeklappt ist, schwenkbar ist, und dass hierzu das erste Zuführelement mit seinem der Schneideinrichtung zugewandten Ende drehbar im Bereich der Schneideinrichtung gelagert und mit der Koppelstange verbunden ist. Vorzugsweise ist das zweite Zuführelement fest mit der Schneideinrichtung verbunden, und zwar derart, dass sich in der ersten Endposition des ersten Zuführelementes zwischen beiden Zuführelementen ein maximaler Öffnungswinkel ergibt.

Weitere Einzelheiten und Vorteile der Erfindung ergeben sich aus den folgenden, anhand von Figuren erläuterten Ausführungsbeispielen. Es zeigen:
- Fig. 1: den vorderen oberen Bereich eines Kampfpanzers mit einem Geschützrohr und einer in ihrer Ruheposition befindlichen Rohrzurrungseinrichtung, welche über eine Koppelstange mit einer erfindungsgemäßen Vorrichtung verbunden ist, und
- Fig. 2: eine Fig.1 entsprechende Ansicht, bei welcher die Rohrzurrungseinrichtung von dem Waffenrohr und die Zuführeinrichtung der erfindungsgemäßen Vorrichtung aus dem Bewegungsraum des Geschützrohres weggeklappt sind.

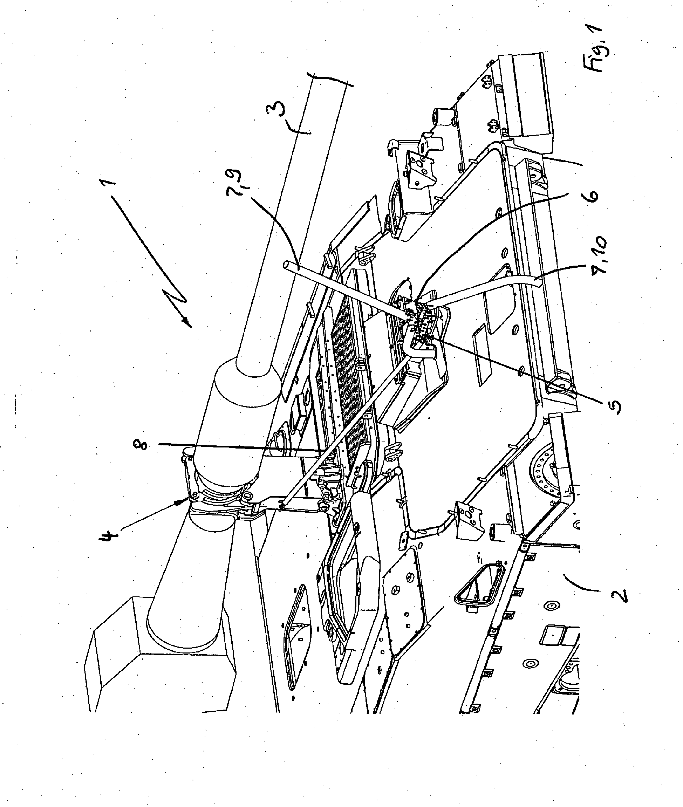

In Fig. 1 ist mit 1 ein Kampfpanzer bezeichnet, der ein gepanzertes Fahrzeug 2 und ein Geschützrohr 3, welches an einem nicht dargestellten Geschützturm angeordnet ist, umfasst. An dem Fahrzeug 2 ist unterhalb des in Fahrtrichtung ausgerichteten Geschützrohres 3 eine klappbare Rohrzurrungseinrichtung 4 befestigt, welche sich in einer Ruheposition befindet und das Geschützrohr 3 fahrzeugseitig abstützt.

Die Rohrzurrungseinrichtung 4 steht mit einer ebenfalls an dem Fahrzeug 2 befestigten erfindungsgemäßen Vorrichtung 5 zur Durchtrennung von quer zur Fahrbahn gespannten Drähten, Seilen oder ähnlichen Hindernissen in Wirkverbindung. Diese Vorrichtung 5 umfasst im Wesentlichen eine Schneideinrichtung 6 zum Durchtrennen der Drähte oder Seile, eine in Fahrtrichtung des gepanzerten Fahrzeuges 2 vor der Schneideinrichtung 6 angeordnete klappbare Zuführeinrichtung 7 zum Einfangen unterhalb des Geschützrohres 3 befindlicher Drähte oder Seile sowie eine Koppelstange 8, welche die Rohrzurrungseinrichtung 4 und die Zuführeinrichtung 7 miteinander verbindet.

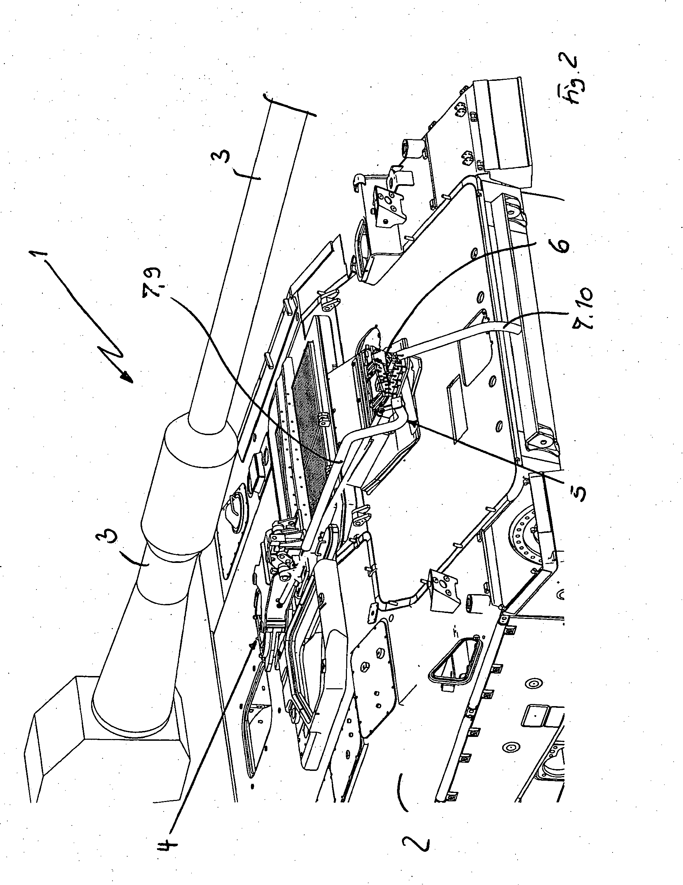

Die Zuführeinrichtung 7 umfasst zwei stabförmige Zuführelemente 9, 10, wobei das erste Zuführelement 9 von einer ersten Endposition, bei der es sich nach oben in Richtung des Geschützrohres 3 erstreckt (Fig. 1), in eine zweite Endposition, bei der es aus dem Bewegungsraum des Geschützrohres 3 weggeklappt ist (Fig. 2), schwenkbar ist. Hierzu ist das erste Zuführelement 9 mit seinem der Schneideinrichtung 6 zugewandten Ende drehbar im Bereich der Schneideinrichtung 6 gelagert und mit der Koppelstange 8 verbunden. Das zweite Zuführelement 10 ist fest mit der Schneideinrichtung 6 verbunden und liegt bei dem in den Fig. dargestellten Ausführungsbeispiel vorderseitig auf der Oberfläche des Fahrzeuges 2 auf, derart, dass sich in der ersten Endposition des ersten Zuführelementes 9 zwischen beiden Zuführelementen 9, 10 ein maximaler Öffnungswinkel ergibt.

Soll nun das Geschützrohr 3 in eine Kampfposition zum Abfeuern von Munition gebracht werden, so wird in an sich bekannter Weise die Rohrzurrungseinrichtung 4 manuell oder automatisch nach hinten (d.h. zum Geschützturm hin) geklappt (Fig. 2). Dabei wird die drehbar an der Rohrzurrungseinrichtung 4 gelagerte Koppelstange 8 nach hinten gezogen und dabei gleichzeitig zum Fahrzeug 2 hin geschwenkt, sodass auch das erste Zuführelement 9 nach hinten aus dem Bewegungsraum des Geschützrohres 3 weggeklappt wird.

### Bezugszeichenliste

- 1: Kampfpanzer
- 2: Fahrzeug
- 3: Geschützrohr
- 4: Rohrzurrungseinrichtung
- 5: Vorrichtung
- 6: Schneideinrichtung
- 7: Zuführeinrichtung
- 8: Koppelstange
- 9: (erstes) Zuführelement, Teil
- 10: (zweites) Zuführelement

## Patentansprüche

1. Vorrichtung zur Durchtrennung von quer zur Fahrbahn gespannten Drähten oder Seilen für ein mit einem schwenkbaren Geschützrohr (3) versehenes Fahrzeug (2) und einer klappbaren Rohrzurrungseinrichtung (4) mit den Merkmalen:
a) die Vorrichtung (5) umfasst eine unterhalb des in seiner Ruheposition befindlichen Geschützrohres (3) an dem Fahrzeug (2) anordbare Schneideinrichtung (6) zum Durchtrennen der Drähte oder Seile sowie eine in Fahrtrichtung des Fahrzeuges (2) vor der Schneideinrichtung (6) angeordnete klappbare Zuführeinrichtung (7) zum Einfangen unterhalb des Geschützrohres (3) befindlicher Drähte oder Seile sowie zu deren Zuführung zur Schneideinrichtung (6), und
b) die Rohrzurrungseinrichtung (4) und die Zuführeinrichtung (7) sind über mindestens eine Koppelstange (8) miteinander verbindbar, derart, dass beim Wegklappen der Rohrzurrungseinrichtung (4) aus ihrer Ruheposition über die Koppelstange (8) die die Bewegung des Geschützrohres (3) störenden Teile (9) der Zuführeinrichtung (7) aus dem Bewegungsraum des Geschützrohres (3) weggeklappt werden.

2. Vorrichtung nach Anspruch 1, **dadurch gekennzeichnet, dass** die Zuführeinrichtung (7) aus zwei stabförmigen Zuführelementen (9, 10) besteht, wobei das erste Zuführelement (9) von einer ersten Endposition, bei der es sich nach oben in Richtung des Geschützrohres (3) erstreckt, in eine zweite Endposition, bei der es aus dem Bewegungsraum des Geschützrohres (3) weggeklappt ist, schwenkbar ist, und dass hierzu das erste Zuführelement (9) mit seinem der Schneideinrichtung (6) zugewandten Ende drehbar im Bereich der Schneideinrichtung (6) gelagert und mit der Koppelstange (8) verbunden ist.

3. Vorrichtung nach Anspruch 2, **dadurch gekennzeichnet, dass** das zweite Zuführelement (10) fest mit der Schneideinrichtung (6) verbunden ist, derart, dass sich in der ersten Endposition des ersten Zuführelementes (9) zwischen beiden Zuführelementen (9, 10) ein maximaler Öffnungswinkel ergibt.

4. Vorrichtung nach einem der Ansprüche 1 bis 3, **dadurch gekennzeichnet, dass** das Geschützrohr (3) mit der klappbaren Rohrzurrungseinrichtung (4) in Wirkverbindung steht, derart, dass die Rohrzurrungseinrichtung (4) in einer vorgegebenen Ruheposition, bei welcher das Geschützrohr (3) in Fahrtrichtung ausgerichtet ist, das Geschützrohr (3) fahrzeugseitig abstützt und vor einer bestimmungsgemäßen Verwendung des Geschützrohres (3) von diesem wegklappbar ist,

## Claims

1. Device for cutting through wires or cables stretched across the roadway for a vehicle (2) provided with a slewable gun barrel (3) and a foldable barrel lashing device (4), with the features:
a) the device (5) comprises a cutting device (6), which can be arranged on the vehicle (2) underneath the gun barrel (3) in its position of rest and is intended for cutting through the wires or cables and also a foldable feeding device (7), which is arranged ahead of the cutting device (6) in the travelling direction of the vehicle (2) and is intended for taking in wires or cables located underneath the gun barrel (3) and feeding them to the cutting device (6), and
b) the barrel lashing device (4) and the feeding device (7) can be connected to one another by way of at least one coupling rod (8) in such a way that, when the barrel lashing device (4) is swung away out of its position of rest, the parts (9) of the feeding device (7) that interfere with the movement of the gun barrel (3) are folded away by means of the coupling rod (8), out of the area of movement of the gun barrel (3).

2. Device according to Claim 1, **characterized in that** the feeding device (7) consists of two rod-shaped feeding elements (9, 10), the first feeding element (9) being pivotable from a first end position, in which it extends upwards in the direction of the gun barrel (3), into a second end position, in which it is folded away out of the area of movement of the gun barrel (3), and **in that** for this purpose the first feeding element (9) is mounted by its end facing the cutting device (6) rotatably in the region of the cutting device (6) and is connected to the coupling rod (8).

3. Device according to Claim 2, **characterized in that** the second feeding element (10) is fixedly connected to the cutting device (6) in such a way that a maximum opening angle between the two feeding elements (9, 10) is obtained in the first end position of the first feeding element (9).

4. Device according to one of Claims 1 to 3, **characterized in that** the gun barrel (3) is in operative connection with the foldable barrel lashing device (4) in such a way that, in a predetermined position of rest, in which the gun barrel (3) is aligned in the travelling direction, the barrel lashing device (4) supports the gun barrel (3) on the vehicle side and, before the gun barrel (3) is used as intended, can be swung away from it.

## Revendications

1. Dispositif de sectionnement de fils ou de câbles tendus transversalement à la chaussée pour un véhicule (2) équipé d'un canon pivotant (3) et d'un dispositif d'amarrage du canon rabattable (4), présentant les caractéristiques suivantes:
a) le dispositif (5) comprend un dispositif de coupe (6) pouvant être disposé sur le véhicule (2) en dessous du canon (3) qui se trouve dans sa position de repos, pour le sectionnement des fils ou des câbles ainsi qu'un dispositif de guidage rabattable (7) disposé devant le dispositif de coupe (6) dans la direction de marche du véhicule (2) pour attraper les fils ou les câbles se trouvent en dessous du canon (3) ainsi que pour les amener au dispositif de coupe (6), et
b) le dispositif d'amarrage du canon (4) et le dispositif de guidage (7) peuvent être reliés l'un à l'autre par au moins une barre de couplage (8), de telle manière que, lors du rabattement du dispositif d'amarrage du canon (4) hors de sa position de repos, les pièces (9) du dispositif de guidage (7) qui gênent le mouvement du canon (3) soient rabattues par la barre de couplage (8) hors du champ de mouvement du canon (3).

2. Dispositif selon la revendication 1, **caractérisé en ce que** le dispositif de guidage (7) se compose de deux éléments de guidage en forme de barre (9, 10), dans lequel le premier élément de guidage (9) peut pivoter d'une première position d'extrémité, dans laquelle il s'étend vers le haut en direction du canon (3), à une deuxième position d'extrémité, dans laquelle il est rabattu hors du champ de mouvement du canon (3), et **en ce que** le premier élément de guidage (9) est à cet effet monté de façon rotative, avec son extrémité tournée vers le dispositif de coupe (6) dans la région du dispositif de coupe (6) et est relié à la barre de couplage (8).

3. Dispositif selon la revendication 2, **caractérisé en ce que** le deuxième élément de guidage (10) est relié de façon fixe au dispositif de coupe (6), de telle manière qu'il se forme un angle d'ouverture maximal entre les deux éléments de guidage (9, 10) dans la première position d'extrémité du premier élément de guidage (9).

4. Dispositif selon l'une quelconque des revendications 1 à 3, **caractérisé en ce que** le canon (3) est en liaison active avec le dispositif d'amarrage du canon (4), de telle manière que le dispositif d'amarrage du canon (4) soutienne le canon (3) côté véhicule dans une position de repos prédéterminée, dans laquelle le canon (3) est orienté dans la direction de marche, et puisse être rabattu à l'écart du canon (3) avant une utilisation normale de celui-ci.
